# EUROPEAN PATENT APPLICATION

(11) **EP 1 261 188 A2**
(43) Date of publication of application: **27.11.2002**
(21) Application number: 02380101.2
(22) Date of filing: 20.05.2002
(51) Int. Cl.: H04L 29/06

(54) **Internet portal**

(30) Priority: 22.05.2001 ES 200101166
(71) Applicant: Internet Protocol Sistemas Net, S.A., 28224 Pozuelo de Alarcon (Madrid) (ES)
(72) Inventor: Munos-Rivero, Luis Permuy, 28224 Pozuelo de Alarcon (Madid) (ES)
(74) Representative: Gil-Vega, Victor

(57) **Abstract**

It consists of a prefabricated element, for series manufacture, easily adaptable to the requirements of a considerable number of users, in which, on a frame (8) are mounted a series of equipment items consisting of a Switch or balancer (9), a Firewall (10), three Netras (11), (12) and (13), the first for forums, diary, chat, provision and logs, the second for DNS and LDAP and the third for Web and FTP, and two E220R (14) and (15), the first for mail and web mail, and the second for a database, NFS and applications services, these equipment items being mounted stacked in the frame (8), with the addition of separating trays (17).

## Description

### SUBJECT OF THE INVENTION

The present invention relates to an Internet portal which has been designed especially as a prefabricated assembly or element which, with slight modifications to detail, is valid for a wide sector of users.

Hence, the object of the invention is to achieve standardization in Internet portals, which avoids the customized design of each portal for each client, with the consequent lowering of costs which that presupposes.

It is a matter therefore of supplying the market with a portal "skeleton", with the integration of services already established, and in which it is only necessary to provide the focus and priority in the management of its contents and marketing for use.

### BACKGROUND OF THE INVENTION

At the present time, whenever an Internet portal is put together, an infrastructural project is implemented, meeting the needs of the client, and the subsequent execution of the said project is carried out by means of a series of standard tools, already designed and tested.

Optimum results are obtained with this approach from the practical point of view, but with very high costs, given the likewise high participation of qualified technical personnel which is required for the running and practical implementation of the project. In fact, the customizing of architectures and the acquisition of specific technical criteria has been transformed into a guarantee from many technical executives among the customers, economy of resources not being regarded as a priority in practically any case.

### DESCRIPTION OF THE INVENTION

Given that, in practice, there exist a great many projects with a very high number of common characteristics, the solution which the invention proposes is offering the market a prefabricated product, which, because of its specific nature, allows manufacture in series, with the integration of services already achieved, in which it is only necessary to introduce slight modifications or particular features which adapt the said basic and common structure to the specific requirements of each case, with minimum participation by technical personnel and with the consequent lowering in costs which that presupposes.

To that end, in more concrete terms, the portal is structured on the basis of an appropriately scaled and configured frame for supporting equipment in which a Firewall or safety system participates, which controls access to the portal on behalf of the users connected to the network, a Switch or balancer, which acts as a changeover switch for connection between the various elements of the system, at least three other Netras, one for the web servers and for FTP, another for forums, diary, chat, provision and logs, and another for the storage logic (LDAP) for managing files, and for the dictionary (DNS) which resolves the addresses. Two E220R also form part of the equipment, one for mail and web mail, and the other for the database, NSF and applications server.

The portal thus structured will be connected to the Internet via a router and the latter may in its turn be connected to a local-area network, an administration network, information systems and private connections to other external systems.

Obviously, depending on the level of services from the portal, the number of Netras which form part of it can be expanded.

### DESCRIPTION OF THE DRAWINGS

In order to supplement the description which is being given, and for the purpose of assisting in a better understanding of the characteristics of the invention, in accordance with a preferred example of a practical embodiment thereof, a set of drawings is attached, as an integral part of the said description, in which the following have been represented, in an illustrative and non-limiting way:
Figure 1 shows the conceptual diagram of a portal produced in accordance with the object of the present invention, duly installed in an Internet system.
Figure 2 shows a block diagram corresponding to the portal of the previous figure.
Figure 3 finally, and according to a view in front elevation, shows the practical implementation of the equipment corresponding to the diagram of the previous figure.

### PREFERRED EMBODIMENT OF THE INVENTION

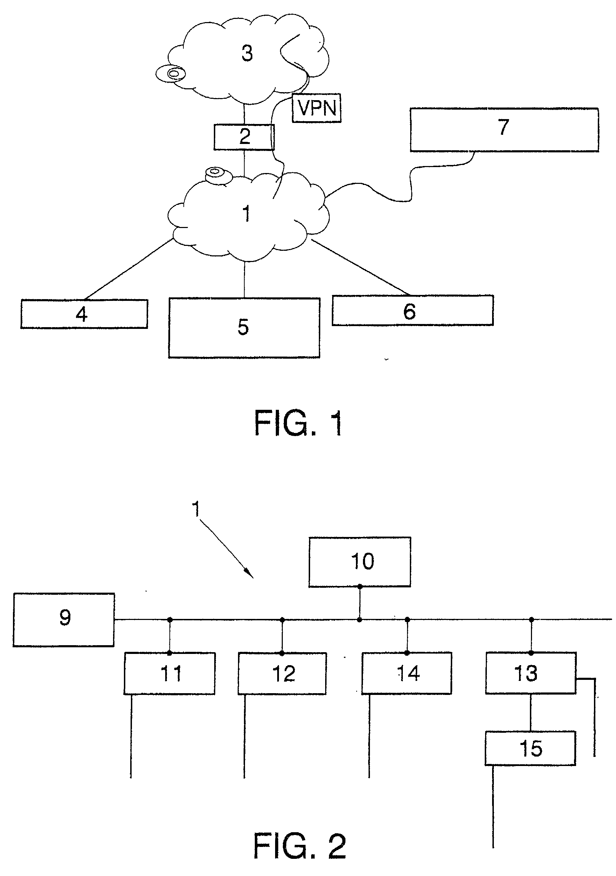

Figure 1 represents, diagrammatically, the portal of the invention, referenced as (1), connected via a router (2) to the Internet (3), the portal (1), in its turn, in accordance with various practical applications thereof, possibly being connected to a corporate network (4), to a specific administration network (5), or, via an operator housing, to information systems (6), and possibly also having available private connections (7) to other external systems.

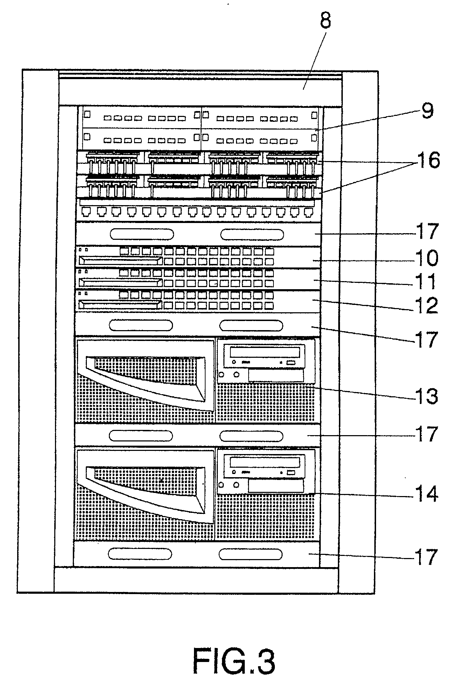

The portal (1), as Figures 2 and 3 in their turn show, is structured on the basis of a series of equipment items mounted on a frame (8), consisting of a Switch or balancer (9) which, like any changeover switch, establishes the connections between the various pieces of equipment and distributes the load, a Firewall (10), taking the physical form of a Netra XI 512 MB 2 × 18.2 GB, a second Netra (11) with the same characteristics for forums, diary, chat, provision and logs, a third Netra (12) also with the same characteristics for DNS and LDAP, and a fourth Netra (13), also with the same characteristics, for Web and FTP; also present among the equipment of the portal are a first E220R (14) with 2 1 GB 2 × 36.4 GB CPUs for mail and web mail, and a second E220R (15) with the same characteristics, for the database, the NFS and the applications server.

In Figure 3, as was stated above, all these pieces of equipment appear appropriately mounted on the frame (8), with their corresponding connections (16) and separating trays (17).

The minim05 services rendered by the portal are as follows:
- Web electronics: basic redundancy, 10/100 ports, two or three options as regards connectivity (Ethernet, Gigabit, for example).
- Presentation logic: Web servers, Wap/Web content adaptation services, and, optionally, services for developing the logic of the portal and for the design of the Webs.
- Business logic: applications server, customization server, internal search engine, interactive services (chat, supervised forums), electronic mail, diary, DNS, registration and validation of users with "single-sign-on", content management tools and content-publication tools.
- Storage logic: LDAP, database, basic backup solution (in basic DDS mode, advanced DLT mode), or providing only the client in order to make it possible to carry out remote backup on an external backup system.
- integration middleware: provision APIS, content-capture APIS, management APIS, including access statistics, logs of incidents and mechanisms for delegated administration of the system.
- Security system: input/output Firewall, monitoring of user profiles, logging of the provision/management functions, functions of access to the systems, statistics management.
- Possessing "connectors" to third-party systems which the system housing the service offers, or the in-house information systems of the company, modular and optional configuration, but high added value: external search engines, Wap emulators, maps, advertising, SMS/push WAP alerts, etc.
- Integrated supervision system (SNMP), clear and complete procedures for use/installation, support for HW/SW.
- Pre-parameterized services, in order, as far as possible, to reduce the time for installation of the eventual solution. In this context, it is useful to have available "templates" of portals prepared in advance, in order to be able to demonstrate it and adapt it to the clients who ask for it, either to sell it, or to sell it as a package to operators and ISPs who resell it.
- Ease of maintenance for the client who buys it: delegated administration Web, remote access to the servers, notification of the status of the services, statistics on use, problems, etc.

## Claims

1. Internet portal which, being designed especially as a prefabricated element, for series manufacture, easily adaptable to the specific requirements of each client, by way of slight modifications or complementary adaptations, is **characterized by** being constructed on the basis of a regular frame (8) appropriately dimensioned to accommodate within it a plurality of equipment items, in particular a Switch or balancer (9), a Firewall (10) physically formed from a Netra, three other Netras (11), (12) and (13), the first for forums, diary, chat, provision and logs, the second for DNS and LDAP and the third for Web and FTP, as well as two E220R (14) and (15), one for mail and web mail, and the other for a database, NFS and applications server, these equipment items being installed in the frame (8), as well as the corresponding connections (16), with the addition of separating trays (17).
